# EUROPEAN PATENT SPECIFICATION

(11) **EP 0 561 377 B1**
(45) Date of publication and mention of the grant of the patent: **16.07.1997**
(21) Application number: 93104345.9
(22) Date of filing: 17.03.1993
(51) Int. Cl.: F16C 25/08, B60B 27/00

(54) **A rolling element bearing, particularly for a wheel assembly of a vehicle**
Wälzlager, insbesondere für ein Fahrzeugrad
Palier de roulement, en particulier pour roue de véhicule

(30) Priority: 20.03.1992 IT TO920240
(43) Date of publication of application: 22.09.1993
(73) Proprietor: SKF INDUSTRIE S.P.A., I-10123 Torino (IT)
(72) Inventor: Bertetti, Paolo, I-10153 Torino (IT)
(74) Representative: Plebani, Rinaldo

(56) References cited:
- EP-A- 0 163 589
- EP-A- 0 339 720
- EP-A- 0 475 792
- DE-A- 2 630 379
- DE-A- 2 843 597
- DE-A- 3 736 140
- DE-U- 8 806 186
- FR-A- 2 086 479
- FR-A- 2 466 664
- GB-A- 2 241 290
- US-A- 3 901 568

## Description

The present invention relates to a rolling element bearing, particularly for a vehicle wheel assembly.

It is well known that vehicle wheel assemblies often use so-called "third generation" rolling element bearings in which both the outer ring and the inner ring are provided, at opposite ends, with respective external flanges which enable them to be fixed to the suspension strut and to the wheel respectively; in this way the inner ring of the bearing operates both as a stub axle and as a hub, thus making considerable savings in cost and in weight. However, in order to ensure that such a bearing of smaller dimensions has sufficient load bearing capacity, the inner ring must be made in two parts or ring-halves; in driving wheel assemblies this is no disadvantage as the two ring-halves are mounted on the shaft of the constant velocity joint and clamped axially in a pack against it.

In free wheel assemblies, however, in the absence of the support element constituted by the shaft of the constant velocity joint, there is both a problem of supporting the two ring-halves and one of maintaining them axially clamped against each other with preset tolerances so as to maintain the correct clearance between the rings and the rotatable members of the bearing.

This problem is solved by appropriate shaping of one of the ring-halves e.g. like in EP-A-0475792 so it can receive the other ring-half coaxially and by the use of means for clamping the latter axially, these means being, for example, half cones housed in an appropriate groove in the bearing ring-half and held by a plastically deformable clamping element, or the clamping element itself, like in Fig. 6 of EP-A-0 475 792.

However, the above solution is not without disadvantages; in particular it prevents a bearing which is suitable for driving wheel assemblies from also being used for free wheel assemblies and it is of relatively large weight and dimensions. Above all, however, this arrangement does not ensure that the correct clearance is maintained between the rings and the rolling elements of the bearing throughout the life of the latter as the ring-halves forming the inner ring are free to rotate relative to each other, thereby wearing the ring-half/half-cone coupling.

The object of the invention is to provide a rolling element bearing, particularly for a vehicle wheel assembly, that may be used, with only minimum variations, both in the driving and in the free wheel assemblies of a vehicle, and that offers a system for axially clamping the ring-halves that ensures that, in use, the correct clearances are maintained between the rolling elements and the rings of the bearing.

According to the present invention there is provided a rolling element bearing as defined in Claim 1.

In order to provide a better understanding of the invention, there follows a non-limitative description of an embodiment, with reference to the appended drawings, in which:
Figure 1 is an elevational view in partial section of a rolling element bearing according to the invention for a vehicle wheel assembly; and
Figure 2 is an elevation view in partial section of a rolling element bearing not in accordance with the present invention but illustrating features which may be used in a rolling element bearing according to the present invention.

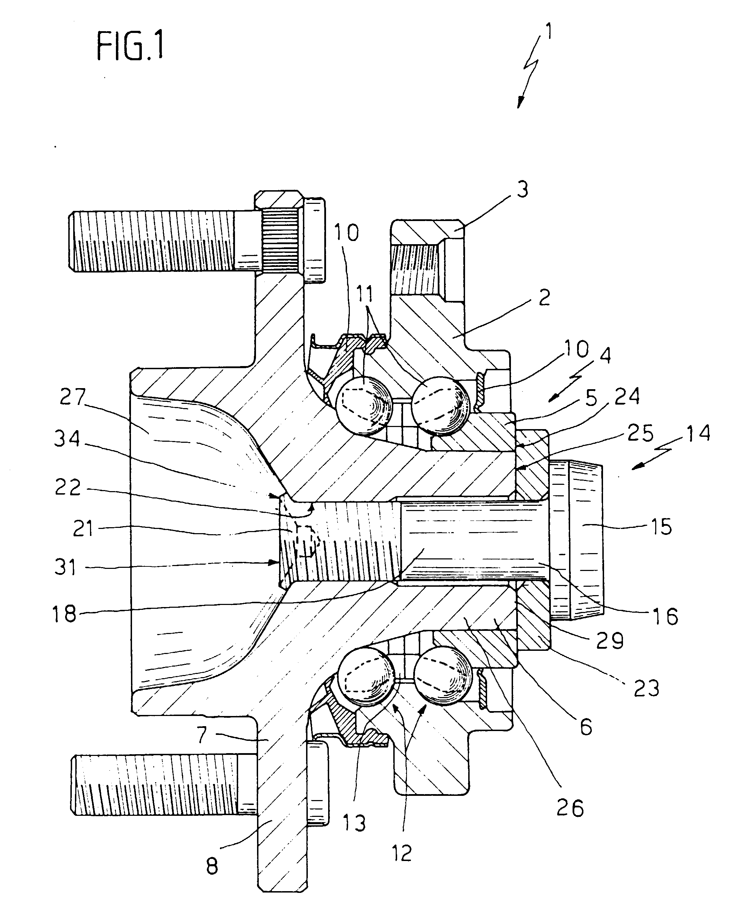

With reference to Figure 1, a rolling element bearing is indicated 1, in particular for a known vehicle wheel assembly, not illustrated in the appended drawings for the sake of simplicity.

The rolling element bearing 1 includes an outer ring 2 having a first outer peripheral attachment flange 3, for attachment for example to a known vehicle suspension strut, not shown for the sake of simplicity, and an inner ring 4 subdivided into two coaxially coupled ring-halves 5 and 6 respectively, the first ring-half 5 being mounted on the outside of a sleeve-shaped portion 26 of the second ring-half 6.

At its end opposite the first ring-half 5, the second ring-half 6 has a second attachment flange 8 for example for receiving a vehicle wheel in known manner not shown for the sake of simplicity; a plurality of rolling elements 11, in the present case balls, is arranged in two rings 12 between the outer ring 2 and the inner ring 4 so as to allow their relative rotation with low friction, the balls being held in position by respective cages 13 and protected by respective seal assemblies 10.

The ring-half 5 is clamped axially on the sleeve portion 26 between the rolling elements 11 of the adjacent ring 12 and respective shoulder means 14 fixed to the ring-half 6 and, in the present case, constituted by the head 15 of a screw 16, the threaded shank 18 of which passes coaxially through the portion 26 and screws into a threaded through-hole 22 in the ring-half 6.

According to the invention, the head 15 of the screw 16 (which is preferably made of steel) bears against a respective end surface 24 of the first ring-half 5 and a corresponding end surface of the portion 26 through an interposed washer of resiliently deformable material, for example steel; the surfaces 24 and 25 are flush and the shank 18 is screwed into the hole 22 for a sufficient length to create a.state of stress in this and in the washer 23 which is absorbed by the resilience of the shank 18 and of the washer 23.

In particular, the shank 18 is under tension while the washer 23 behaves as a continuous beam bearing on four supports defined, in the section of Figure 1, by adjacent portions of the surfaces 24 and 25 on opposite sides of the screw 16, and is subject to the load transmitted to it by the head 15.

In use, if wear due to any relative rotation of the ring-halves 5 and 6 should result in a clearance between the surface 25 and the washer 23, this clearance would be equivalent, for the "continuous beam" washer 23, to the collapse of one support and would therefore automatically be annulled by the resulting resilient recovery due to the load applied to the washer 23 by the axial tension in the screw 16.

In this way, the clearance between the rolling elements 11 of the ring 12 adjacent the ring-half 5 and the outer ring 2 always remains constant and the same as when the bearing was assembled.

The through-hole 22 formed in the ring-half 6 ends in an outwardly flaring, substantially frusto-conical cavity 27; for safety, in order to prevent any accidental separation of the ring-halves 5 and 6 as a result of the screw 16 coming unscrewed following loss of the resilient tension in the shank 18, this latter terminates in an end 21 having a conical recess 31 whereby the end 21 is upset, as shown at 34, against the peripheral wall of the cavity 27 by means of an appropriate tool, known and therefore not shown for the sake of simplicity.

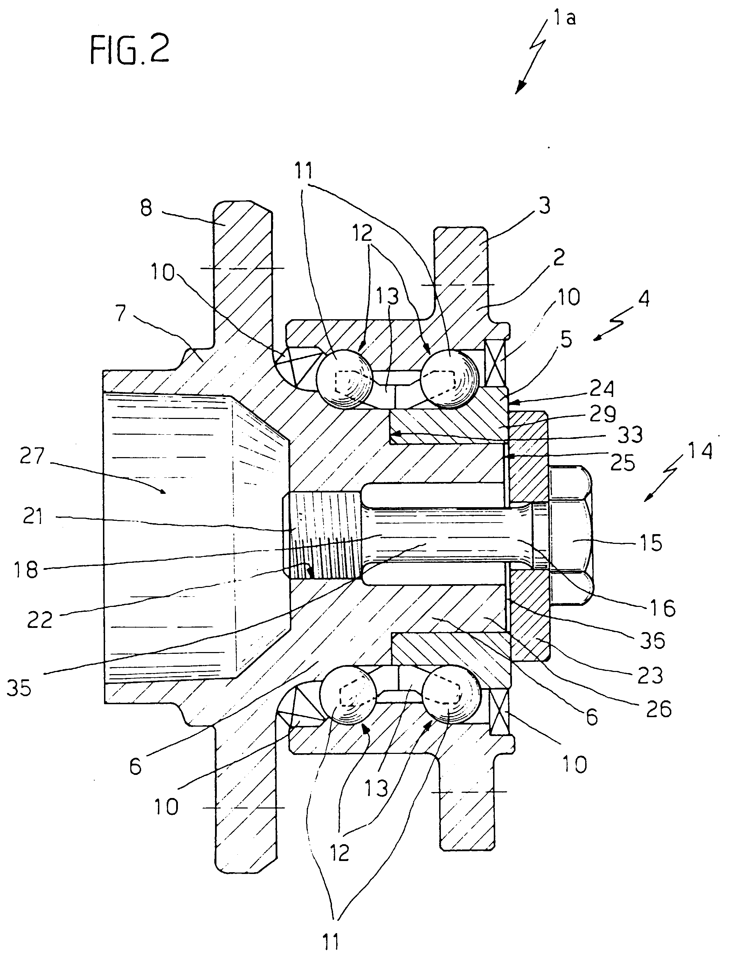

Figure 2 shows a possible variant la of the bearing 1 described above; details which are similar or identical to those already described are indicated by the same numbers for the sake of simplicity.

In particular, the sleeve portion 26 of the ring-half 6 is formed as a cylindrical abutment portion with a smaller diameter than that of the ring-half 6 which projects from a shoulder 33 of the latter by a distance less than the length of the ring-half 5; this latter is fitted coaxially onto the abutment portion 26 so as to bear against the shoulder 33 and project at its end 29 beyond the ring-half 5 in such a way that the surfaces 24 and 25 are not flush but the surface 24 is offset outwardly relative to the surface 25. In order to improve its resilience, the screw 16 has a shank 18 with a thinner central portion 35; a washer 23, similar to that described earlier may, but need not, be interposed between the head 15 and the ring-half 5.

Based on the above description, the washer 23 (or, in its absence, the head 15 of the screw 16) bears against the surface 24 while an axial clearance 36 exists between the washer and the surface 25. In use, even without the washer 23, if, due to wear, a clearance should be created at the surface 24 which could allow the ring-half 5 to move axially, this clearance would be taken up instantly by the resilient shortening of the shank 18 thanks to the reduction in the tension in the latter as a result of the release of the constraint constituted by the support defined by the surface 24; therefore, in this case as well, the clearance established between the balls 11, the ring 2 and the ring-half 5 during assembly is maintained constant.

The washer 23, when used, acts only as a contact element between the head 15 and the ring-half 5 since, owing to the presence of the axial clearance 36, it behaves like a simple isostatic beam on two supports.

From the above description, the advantages connected with the present invention are clear: the presence of an axial clamping element such as the screw or the tubular sleeve housed in a through-hole in the second ring-half and suitably preloaded so as to be in a state of resilient tension enables the first ring-half to be kept constantly clamped axially onto the second ring-half without increasing the dimensions and/or the weight of the bearing and, above all, enables the same bearing to be used in the assemblies both of the driving wheels and the free wheels of a vehicle, the only additional operation required for bearings intended for driving wheel assemblies having to effect the necessary broaching to provide the grooved coupling for the constant velocity joint.

Finally, the resilient recovery of clearance due to wear caused by relative rotation of the ring-halves enables the bearing always to function under optimum conditions, thereby ensuring a longer life and greater reliability than any bearings used until now in wheel assemblies.

## Claims

1. A rolling element bearing (1,1a,1b), particularly for a vehicle wheel assembly, including an outer ring (2) having a first outer peripheral attachment flange (3), an inner ring (4) subdivided into two ring-halves (5,6), coupled coaxially a first (5) on a second (6), the second ring-half (6) having a second outer peripheral attachment flange (8) at its opposite end (7) from the first ring-half (5), a plurality of rolling elements (11) interposed between the outer ring (2) and the inner ring (4) to enable their relative rotation with low friction, and shoulder means (14) for clamping the first ring-half (5) axially on the second ring-half (6); the shoulder means (14) including an elongated element (16) and at least one resiliently deformable element (16, 23) which cooperates with the first ring-half (5) and is mounted so as to be in a state of resilient stress of predetermined magnitude; said elongated element comprising an axial stop (15) exerting a thrust against an end surface (24) of the first ring-half (5) and a recess (31) provided opposite to said axial stop (15), the second ring-half (6) having a cavity (27) widening outwardly, around said recess said element being upset against a peripheral wall of the cavity (27) to effect axial clamping; *characterized in that:*
- said elongated element is a screw (16) having a shank (18), fitted coaxially through the second ring-half (6) and screwed into a threaded through hole (22) in the second ring-half (6); the screw also having a head (15) which bears against said end surface (24) of the first ring-half (5); and
- said cavity (27) is substantially frusto-conical, said recess (31) being conical too and being provided on the shank (18) of the screw (16) at the opposite end from the head (15); the shank being upset around said recess (31) against a peripheral wall of the cavity (27) to effect said axial clamping.

2. A rolling element bearing (1, 1a) according to Claim 1, characterised in that a washer (23) is interposed between the head (15) of the screw (16) and the first ring-half (5).

3. A rolling element bearing (1) according to Claim 2, characterised in that the second ring-half (6) includes a substantially sleeve-shaped smaller-diameter portion (26) on which the first ring-half (5) is coaxially fitted; one end (29) of the sleeve portion (26) having an end surface (25) flush with the end surface (24) of the first ring-half (5), and the washer being constituted by a resiliently deformable element which is in cooperating contact with both end surfaces (24, 25) of the ring-halves (5, 6).

4. A rolling element bearing (1a) according to Claim 1 or Claim 2, characterised in that the second ring-half (6) includes a substantially sleeve-shaped, smaller diameter portion (26) on which the first ring-half (5) is fitted coaxially; one end (29) of the sleeve portion (26) has an end surface (25) axially retracted from the end surface (24) of the first ring-half (5) so as to define an axial clearance (36) with the head (15) of the screw (16);
and the shank (18) of the latter includes a thinner intermediate portion (35) and is made of a resiliently deformable material.

5. A rolling element bearing (1, 1a) according to any one of Claims 1 to 4, characterised in that the screw is screwed into the hole (22) for a sufficient length to subject the screw (16) itself to a state of resilient tension.

## Patentansprüche

1. Wälzlager (1, 1a), insbesondere für Fahrzeugräder, mit einem äußeren Ring (2), der einen ersten Befestigungsflansch (3) am Außenumfang besitzt, einem inneren Ring (4), der in zwei Ringhälften (5, 6) unterteilt ist, von denen die erste (5) koaxial auf der zweiten (6) sitzt, die einen zweiten Außenumfangs-Befestigungsflansch (8) an ihrem der ersten Ringhälfte (5) gegenüberliegenden Ende (7) besitzt, einer Mehrzahl von Wälzkörpern (11), die zwischen dem äußeren Ring (2) und dem inneren Ring (4) angeordnet sind, um deren relatives Verdrehen unter geringer Reibung zu ermöglichen, und Anschlagmitteln (14) zum axialen Festklemmen der ersten Ringhälfte (5) an der zweiten Ringhälfte (6), wobei die Anschlagmittel (14) ein längliches Element (16) und wenigstens ein elastisch verformbares Element (16, 23) aufweisen, das mit der ersten Ringhälfte (5) zusammenwirkt und so montiert ist, daß es sich in einem Zustand elastischer Spannung vorbestimmter Größe befindet, das längliche Element einen axialen Anschlag (15), der einen Druck gegen eine Endfläche (24) der ersten Ringhälfte (5) ausübt, und eine entgegengesetzt zum Anschlag (15) liegende Ausnehmung (31) besitzt, die zweite Ringhälfte (6) eine sich nach außen erweiternde Aushöhlung (27) besitzt und das Element um die Ausnehmung herum gegen eine Umfangswand der Aushöhlung (27) aufgestaucht ist, um ein axiales Verklemmen zu bewirken, **dadurch gekennzeichnet**, daß das längliche Element eine Schraube (16) mit einem Schaft (18), der koaxial durch die zweite Ringhälfte (6) verläuft und in eine Gewindedurchgangsbohrung (22) in der zweiten Ringhälfte (6) eingeschraubt ist, und einem Kopf (15) ist, der sich an der Endfläche (24) der ersten Ringhälfte (5) abstützt, und die Aushöhlung (27) im wesentlichen kegelstumpfartig und auch die Ausnehmung (31) konisch ist, die am Schaft (18) der Schraube (16) an dem dem Kopf (15) entgegengesetzten Ende vorgesehen ist, wobei der Schaft um die Ausnehmung (31) herum gegen eine Umfangswand der Aushöhlung (27) aufgestaucht ist, um das axiale Verklemmen zu bewirken.

2. Wälzlager (1, 1a) nach Anspruch 1, **dadurch gekennzeichnet**, daß zwischen dem Kopf (15) der Schraube (16) und der ersten Ringhälfte (15) eine Scheibe (23) vorgesehen ist.

3. Wälzlager (1) nach Anspruch 2, **dadurch gekennzeichnet**, daß die zweite Ringhälfte (6) einen im wesentlichen hülsenförmigen Bereich (26) kleineren Durchmessers aufweist, auf welchem die erste Ringhälfte (5) koaxial sitzt, wobei ein Ende (29) des Hülsenbereichs (26) eine mit der Endfläche (24) der ersten Ringhälfte (5) fluchtende Endfläche (25) besitzt und die Scheibe aus einem elastisch verformbaren Element besteht, welches in zusammenwirkender Berührung mit beiden Endflächen (24, 25) der Ringhälften (5, 6) steht.

4. Wälzlager (1a) nach Anspruch 1 oder 2, **dadurch gekennzeichnet**, daß die zweite Ringhälfte (6) einen im wesentlichen hülsenförmigen Bereich (26) kleineren Durchmessers aufweist, auf welchem die erste Ringhälfte (5) koaxial sitzt, wobei ein Ende (29) des Hülsenbereichs (26) eine von der Endfläche (24) der ersten Ringhälfte (5) axial zurückgezogene Endfläche (25) besitzt, so daß ein axiales Spiel (36) zum Kopf (15) der Schraube (16) entsteht, und der Schaft (18) letzterer einen dünneren Zwischenbereich (35) besitzt und aus einem elastisch verformbaren Material besteht.

5. Wälzlager (1, 1a) nach einem der Ansprüche 1 bis 4, **dadurch gekennzeichnet**, daß die Schraube über eine ausreichende Länge in die Bohrung (22) eingeschraubt ist, um die Schraube (16) einem Zustand elastischer Spannung auszusetzen.

## Revendications

1. Palier (1, 1a, 1b) à éléments roulants, particulièrement pour une roue de véhicule, comprenant une bague extérieure (2) comportant une première bride périphérique extérieure de fixation (3), une bague intérieure (4) divisée en deux demi-bagues (5, 6), une première (5) couplée coaxialement sur une seconde (6), la seconde demi-bague (6) comportant une seconde bride périphérique extérieure de fixation (8) à son extrémité (7) opposée à la première demi-bague (5), une pluralité d'éléments roulants (11) interposés entre la bague extérieure (2) et la bague intérieure (4) pour permettre la rotation relative de celles-ci avec un faible frottement, et un moyen formant épaulement (14) pour bloquer la première demi-bague (5) axialement sur la seconde demi-bague (6), le moyen formant épaulement (14) comprenant un élément allongé (16) et au moins un élément (16, 23) déformable élastiquement qui coopère avec la première demi-bague (5) et est monté de manière à se trouver dans un état de contrainte élastique de valeur prédéterminée, ledit élément allongé comprenant une butée axiale (15) exerçant une poussée contre une surface d'extrémité (24) de la première demi-bague (5) et un évidement (31) formé en face de ladite butée axiale (15), la seconde demi-bague (6) comportant une cavité (27) s'élargissant vers l'extérieur autour dudit évidement, ledit élément étant refoulé contre une paroi périphérique de la cavité (27) pour que soit effectué un blocage axial; caractérisé en ce que:
- ledit élément allongé est une vis (16) comportant une tige (18), disposée coaxialement à travers la seconde demi-bague (6) et vissée dans un trou fileté (22) de la seconde demi-bague (6), la vis comportant aussi une tête (15) qui porte contre ladite surface d'extrémité (24) de la première demi-bague; et
- ladite cavité (27) est sensiblement tronconique, ledit évidement (31) étant conique aussi et étant formé dans la tige (18) de la vis (16) à l'extrémité située à l'opposé de la tête (15), la tige étant refoulée, autour dudit évidement (31), contre une paroi périphérique de la cavité (27) pour que soit effectué ledit blocage axial.

2. Palier (1, 1a) à éléments roulants selon la revendication 1, caractérisé en ce qu'une rondelle (23) est interposée entre la tête (15) de la vis (16) et la première demi-bague (5).

3. Palier (1) à éléments roulants selon la revendication 2, caractérisé en ce que la seconde demi-bague (6) comprend une partie (26) de plus petit diamètre, sensiblement en forme de manchon, sur laquelle la première demi-bague (5) est montée coaxialement, une extrémité (29) de la partie manchon (26) comportant une surface d'extrémité (25) située de niveau avec la surface d'extrémité (24) de la première demi-bague (5), et la rondelle étant constituée par un élément élastiquement déformable qui est en contact coopérant avec les deux surfaces d'extrémité (24, 25) des demi-bagues (5,6).

4. Palier (1a) à éléments roulants selon la revendication 1 ou la revendication 2, caractérisé en ce que la seconde demi-bague (6) comprend une partie (26) de plus petit diamètre, sensiblement en forme de manchon, sur laquelle la première demi-bague (5) est montée coaxialement; une extrémité (29) de la partie manchon (26) comporte une surface d'extrémité (25) située axialement en retrait de la surface d'extrémité (24) de la première demi-bague (5) de manière à définir un espace libre axial (37) avec la tête (15) de la vis (16), et la tige (18) de cette dernière comprend une partie intermédiaire plus fine (35) et est formée d'un matériau élastiquement déformable.

5. Palier (1, 1a) à éléments roulants selon l'une quelconque des revendications 1 à 4, caractérisé en ce que la vis est vissée dans le trou (22) sur une longueur suffisante pour soumettre la vis (16) elle même à un état de tension élastique.
